# EUROPEAN PATENT SPECIFICATION

(11) **EP 1 817 712 B1**
(45) Date of publication and mention of the grant of the patent: **10.01.2018**
(21) Application number: 05807155.6
(22) Date of filing: 16.11.2005
(51) Int. Cl.: G06F 21/73, G06F 21/78

(54) **METHOD AND APPARATUS FOR TRANSFERRING A DATA CARRIER OF A FIRST SYSTEM TO A SECOND SYSTEM**
VERFAHREN UND VORRICHTUNG ZUR ÜBERTRAGUNG EINES DATENTRÄGERS EINES ERSTEN SYSTEMS AUF EIN ZWEITES SYSTEM
PROCEDE ET APPAREIL PERMETTANT DE TRANSFERER UN SUPPORT DE DONNEES D'UN PREMIER SYSTEME A UN SECOND SYSTEME

(30) Priority: 23.11.2004 EP 04106010
(43) Date of publication of application: 15.08.2007
(73) Proprietor: NXP B.V., 5656 AG Eindhoven (NL)
(72) Inventor: CERNUSCA, Michael, 1101 Vienna (AT)
(74) Representative: Krott, Michel
(86) International application number: PCT/IB2005/053781
(87) International publication number: WO 2006/056911

(56) References cited:
- EP-A- 1 338 996
- GB-A- 2 387 254
- US-B1- 6 647 497
- W RANKL AND W EFFING: "Handbuch der Chipkarten" 2002, HANSER VERLAG , MÜNCHEN , XP002381876 page 644 - page 654
- LENDER F: "HERSTELLUNG, PERSONALISIERUNG UND VERSAND VON CHIPKARTEN - EIN UEBERBLICK" IT + TI INFORMATIONSTECHNIK UND TECHNISCHE INFORMATIK, OLDENBOURG VERLAG. MUNCHEN, DE, vol. 39, no. 5, October 1997 (1997-10), pages 7-13, XP000702135 ISSN: 0944-2774
- FINKENZELLER K: "RFID-Handbuch: Kapitel 8 (Datensicherheit), 10.1 (Transponder mit Speicherfunktion)", 31 December 1998 (1998-12-31), RFID HANDBUCH, HANSER VERLAG, MUENCHEN, DE, PAGE(S) 133 - 140,155, XP002394433,

## Description

### FIELD OF THE INVENTION

The invention relates to a method of transferring a first electronic data carrier of a first system to a second system, according to claim 1. The invention furthermore relates to a radio frequency identification tag, RFID for short, according to claim 8.

### BACKGROUND OF THE INVENTION

In connection with the use of first data carriers, in respect of the invention these should be understood as meaning in particular transponders, for example RFID tags, which transponders are in each case associated with a product and designed for wireless communication with a communication station. However, it should be pointed out at this point that the invention is not restricted to the use of RFID tags but rather can be applied to a large number of other electronic data carriers. By way of example, a first electronic data carrier can itself function as a product if for example music, videos, text or images are stored thereon. Such data are often supplied on so-called compact flash cards, multimedia cards, smart media cards, memory sticks and on USB sticks.

As known from the prior art, when using RFID tags, considerable advantages are obtained in production, storage, logistics and similar fields of use. By way of example, data such as date of manufacture, manufacturer, permitted field of use, intermediary trader, delivery address, etc. can be stored on the transponder and made electronically available in this way.

While the products provided with RFID tags are in production or in a transport or storage cycle, the possibilities afforded by the RFID tags of transmitting data to corresponding stations in a production and transport cycle rarely appear to be problematic, since the RFID tags can be protected against unauthorized access by means of a password. In this way it can be ensured that the only people who can read said data are those authorized to do so, that is to say the manufacturer during production, the carrier during transport, etc.

When the product is passed from one owner (in this case any person who physically has a product) to the next, it must be ensured that access rights are correctly transferred. This is particularly the case when such a product is handed over to a consumer, because unauthorized access to the data carrier associated with the product or contained in the product would be an undesirable intrusion of privacy. If no appropriate securing of such a transponder is provided, data could be accessed by appropriate reading stations.

Besides the advantages of storing data on an RFID tag for a manufacturer or in connection with transport or storage, wherein such data may also be used for example after purchase in connection with guarantee or maintenance purposes or may facilitate disposal or recycling operations which are in some cases laid down by law, it is also possible on such a transponder to provide data which may be useful for correct or simplified use by a customer of the product provided with the transponder. In this connection, for example, it has already been proposed to equip items of clothing with RFID tags on which data relating to the care of such items of clothing are contained, wherein, when using intelligent machines to care for items of clothing, in particular special washing machines, it is possible to prevent incorrect treatment of such items of clothing by virtue of direct communication between the washing machine and an item of clothing, so that damage to or destruction of such an item of clothing can be prevented. Another example would also be a microwave meal in which instructions for the microwave oven are stored on an RFID tag on the packaging, that is to say for example the power and heating time that are to be set. It is also conceivable to write permissible operating data to an RFID tag on a circular saw blade, that is to say for example the highest permissible rotational speed or permissible materials and a suitable advance speed. The list is in no way complete and is intended to illustrate at this point only the large number of conceivable use possibilities of RFID tags in respect of the invention.

Taking account of the abovementioned, unsolved problems in connection with preventing undesirable and/or unauthorized access to data on an RFID tag, the practice at present is that, when a product equipped with a transponder is sold, said transponder is either completely removed from the product, the chip contained on the transponder is completely destroyed by a corresponding command, or at least the data of the transponder are deleted. However, in this way, as is immediately obvious, the abovementioned advantages, for example in respect of a customer for correct handling of a product provided with a transponder or in respect of the manufacturer or supplier for example in connection with guarantee claims, maintenance or subsequent disposal, are ruined. In respect of such a deletion of data on a transponder or destruction of the chip contained in the transponder, reference should be made for example to US 6,025,780 or US 6,317,028.

In connection with protecting a transponder against undesirable manipulation and/or undesirable reading of data contained on the transponder, it is also possible, as already mentioned, to protect such a transponder by means of a password, so that access to the transponder or to the data of the transponder is possible only by an authorized person, for example by the manufacturer of a product provided with the transponder. In this connection, reference should be made for example to WO-A 03/094105. In this known method of securing a transponder, however, it has proven to be disadvantageous that the password provided on such a transponder cannot be changed, so that, for example when a product provided with a transponder is sold, either the purchaser has to be informed about the password, wherein one prerequisite for this is that the purchaser has the appropriate technical equipment for communication with the transponder, which has to be matched to the specifications of the respective manufacturer of the transponder and/or user of the same, or that, upon being sold, the protection of the data that is afforded by the password must be given up, but this would once again lead to the abovementioned disadvantages in terms of a lack of protection of privacy. When using a method as has become known from WO-A 03/094105, effective protection of the data on the transponder can thus essentially be provided for example only in the range of a manufacturer of a product provided with such a transponder.

The article by W. Rankl and W.Effing: "Handbuch der Cipkarten" 2002, Hanser Verlag, München describes a method for storing personal data on smart cards such as cash cards, the personal data being secured by password protection.

US 6,647,497 B1 discloses method and system aspects for securely transferring a computer system, whereby the computer system is disabled at a shipping point via a RFID interface and re-enabled at a receiving point via the RFID interface. GB2387254 features a data carrier containing an password for authenticating a user to a computer system.

### OBJECT AND SUMMARY OF THE INVENTION

It is an object of the invention to provide a method, an RFID tag and write/read devices of the type mentioned above, in which the aforementioned disadvantages are avoided. In particular, it is an object of the present invention to provide possibilities for using the data contained on a first data carrier for different user circles while taking account of sufficient protection of privacy of the respective proprietor of a product provided with such a first data carrier.

In order to achieve the abovementioned objects, the method of the aforementioned type includes overwriting the password stored on the first data carrier with a password valid in the second system, wherein, for transferring a password valid in one system between the two systems, a second electronic data carrier or a mobile device is provided, on which the password valid in the system is stored.

Furthermore, in order to achieve the abovementioned objects, a radio frequency identification tag, RFID for short, of the aforementioned type is provided, which additionally comprises means for activating and deactivating the password protection of said RFID tag.

The object of the invention is also achieved by a write/read device for data carriers, comprising:
- means for transmitting a password valid in a first system to a first data carrier,
- means for assessing a comparison of a password stored on the first data carrier with the transmitted password,
- means for overwriting the password of the first data carrier with a password valid in a second system, depending on the outcome of the comparison, and
- means for reading the password valid in the second system from a second data carrier or a mobile device.

Finally, the object of the invention is also achieved by a write/read device for data carriers, comprising:
- means for reading an identification of a first data carrier,
- means for determining a password which is assigned to a read identification of the first data carrier,
- means for transmitting the password to the first data carrier,
- means for assessing a comparison of a password stored on the first data carrier with the transmitted password,
- means for overwriting the password of the first data carrier with a password valid in a second system, depending on the outcome of the comparison, and
- means for reading identifications and passwords from a second data carrier or a mobile device, on which identifications and passwords of the first system of data carriers have been stored in pairs.

By transferring the password between two systems by means of a second electronic data carrier or a mobile device on which a password valid in one system is stored, different users or proprietors of a product provided with a first data carrier can in each case protect a product provided with a first data carrier by means of a password which is known only to the respective proprietor of the relevant product. In this way, only the proprietor of a product provided with the first data carrier has access to the data contained on the first data carrier. The situation can thus be prevented for example whereby, in the event of a change of proprietor of such a product, the content of the data contained on the first data carrier or the chip contained on the first data carrier has to be destroyed or the entire first data carrier is removed from the product, which would result in the abovementioned disadvantages for example in respect of subsequent maintenance or servicing operations or disposal.

It is thus also essential to the present invention that the data carrier to be associated with a product has possibilities for storing a variable password, so that the advantages specified for example in WO-A 03/094105 in respect of a data carrier protected by a password and access to a data carrier protected by a password can be utilized by different proprietors of a product independently of one another and at the same time the advantages of providing product-specific data for the product associated with the first data carrier can be made available throughout the entire service life of the relevant product.

When, in the text which follows, the present invention is discussed in detail in particular in connection with the purchase of a product provided with a first data carrier, wherein in particular the advantages of using the data contained on a first data carrier are discussed in respect of a purchaser of a product while at the same time taking account of protecting the privacy of a customer following purchase of the product, it should be noted that a large number of other use possibilities of the present invention are conceivable. By way of example, the present invention can be applied not just to the transfer between seller and end customer but also to the transfers between producer and carrier, carrier and intermediary trader, etc.

The second data carrier which is used may for example be a customer loyalty card, as are often used nowadays. In this case, a customer loyalty card, which is issued to a customer by a seller, contains storage means for transferring a password from one system to another. However, it is equally possible to use a mobile device which contains the aforementioned storage means.

It is advantageous if the following steps are carried out at the boundary of the first system:
- transmission of a password valid in the first system to the first data carrier,
- comparison of the password stored on the first data carrier with the transmitted password, and
- in the event of a positive outcome of the comparison, overwriting of the stored password with a password valid in the second system, which password is read from the second data carrier or the mobile device.

In this variant of the invention, a second data carrier or a mobile device is used to carry a password valid in the second system to the first system and to make it available there at the boundary of the first system. The second data carrier may be, as already mentioned, a customer loyalty card which is issued by the seller. Said second data carrier is integrated in the second system and stores a respectively up-to-date password. At a sales terminal, the passwords of all the first data carriers (if a number of products have been purchased) are then changed to the password valid in the second system. Following this changeover operation, the first data carriers immediately belong to the second system and can from then on only be read or changed by the purchaser. The same applies when a mobile device is used instead of the second data carrier. This mobile device may be for example a mobile telephone with an interface according to the Near Field Communication, or NFC, standard. Besides the password valid in the second system, other data may also of course be managed in both cases.

Unlike the currently known prior art, in which the first data carrier has to be removed or destroyed when a product provided with the first data carrier is sold, in order to protect privacy, the right of access to the first data carrier is transferred to the purchaser upon concluding a sale at a point of sale. It should be noted at this point that access to the first data carrier need not refer just to access to data of the data carrier. Rather, it is conceivable that the first data carrier additionally contains sensors, for example a temperature sensor on the packaging of perishable goods, which can be switched on and off. Similarly, certain parts of the data carrier could be activated or deactivated.

It is advantageous in the aforementioned method if the following steps are carried out beforehand:
- reading of the identification from the first data carrier,
- transmission of the same to a database in which identifications and passwords of data carriers of the first system are stored in pairs, and
- determination of the password which is assigned to the transmitted identification.

The above method can be advantageously used in particular when no standard password exists in the first system for all the first data carriers contained therein. In this case, an identification is read from each first data carrier and transmitted to a database of the first system, in which database the associated password is determined for each identification. These passwords are then transmitted to the associated first data carrier, in order to obtain access to the same. Thereafter, as already described, the password on a first data carrier is replaced by a password valid in the second system.

A method in which the following steps are carried out at the boundary of the first system is also particularly advantageous:
- reading of the identification from the first data carrier,
- transmission of the same to a database in which identifications and passwords of data carriers of the first system are stored in pairs,
- determination of the password which is assigned to the transmitted identification, and
- storage of the password and of the identification on the second data carrier or the mobile device.

Instead of carrying the password by means of the second data carrier from the second system to the first system, in this case identifications and passwords are carried from the first system to the second system. At a sales terminal, the identifications and passwords of all the first data carriers (if a number of products have been purchased) are stored on the second data carrier. The first data carriers in this case still belong to the first system. Only at the boundary of the second system are the data read from the second data carrier and used to supply the first data carriers with the password valid in the second system. Only after this changeover operation do the first data carriers belong to the second system and can from then on be read and changed only by the purchaser.

It is also advantageous if a check is made to ascertain whether a second data carrier or a mobile device is present and, in the event of a negative outcome of the check, the password protection of the first data carrier is deactivated. It may be that the customer has forgotten his customer loyalty card or his mobile device, or does not own one at all. In order in this case to allow the transfer of first data carriers from the first system to the second system, the password protection is deactivated at the boundary of the first system. That is to say that the first data carrier is in this case unprotected until it is integrated in the second system. This is also advantageous when a customer does not wish to set up such a protected second system until a later point in time.

One advantageous variant of the invention is also given by a method in which the following steps are carried out at the boundary of the second system:
- reading of the identification of the first data carrier,
- reading of the identifications and passwords from the second data carrier or the mobile device, on which identifications and passwords of a first system of data carriers have been stored in pairs,
- determination of that password which is assigned to the read identification and transmission of the password to the first data carrier,
- comparison of the password stored on the first data carrier with the transmitted password, and
- overwriting of the stored password with a new password, which is valid in the second system, in the event of a positive outcome of the comparison.

These steps are necessary when a first data carrier is not immediately integrated in the second system at the boundary of the first system. In this case, identifications and associated passwords of first data carriers are carried from the first system to the second system by means of the second data carrier. At the boundary of the second system, the password of a first data carrier is then changed to a password valid in the second system.

It is also advantageous if firstly a check is made to ascertain whether access to the first data carrier is possible and, in the event of a positive outcome of the check, the following steps are carried out:
- transmission of a password valid in the second system to the first data carrier in the event of a positive outcome of the check, and
- activation of the password protection of the first data carrier.

It is conceivable that just the password protection of the first data carrier is removed at the boundary of the first system, that is to say for example at a sales terminal of the first system. This may be the case if the customer has forgotten his customer loyalty card. In this case, it is important to integrate unprotected first data carriers quickly into the second system, in order to ensure privacy.

Finally, it is particularly advantageous if the password valid in the second system for all the first data carriers assigned to the second system, for the second data carrier, for the mobile device and for the write/read devices for the aforementioned data carriers is continuously changed.

According to this measure, the advantage is obtained that the first data carrier remains protected even if the password of the second system (that is to say the customer password) is stored with criminal intent at a point of sale of the first system (that is to say by the seller). Otherwise, a seller would be able to access the first data carriers of the second system using the aforementioned password if the customer once again entered the range of the respective point of sale. Regular changing of the password of the second system makes such storage at the point of sale ad absurdum, since access to the data of the first data carrier is no longer possible after a short time, so that the desired protection of privacy is ensured.

While an apparatus, in particular a sales terminal, according to the present invention must provide possibilities both for reading in the password of the seller and means for reading in a password of the customer, it is furthermore additionally provided, in a system for securing at least one transponder according to the invention, which is owned for example by a customer or by a proprietor other than an original proprietor of the product, that means are provided for inputting or generating a password and also for transferring (in particular automatically) a password to the transponder.

The variants mentioned above in respect of the method according to the invention and the resulting advantages also apply in respect of the transponders according to the invention and in respect of the write/read devices according to the invention, and for this reason no separate discussion thereof will be given here. These and other variants can easily be derived by the person skilled in the art without departing from the wide field of application of the invention.

### BRIEF DESCRIPTION OF THE DRAWINGS

The invention will be further described with reference to examples of embodiments shown in the drawings to which, however, the invention is not restricted.
Fig. 1 shows the essential elements of a first data carrier according to the invention.
Fig. 2 shows the transfer of a first data carrier from a first system to a second system at the boundary of the first system.
Fig. 3 shows the transfer of a first data carrier from a first system to a second system at the boundary of the second system.
Fig. 4 shows a schematic arrangement of a first system.
Fig. 5 shows a schematic arrangement of a second system.

### DESCRIPTION OF EMBODIMENTS

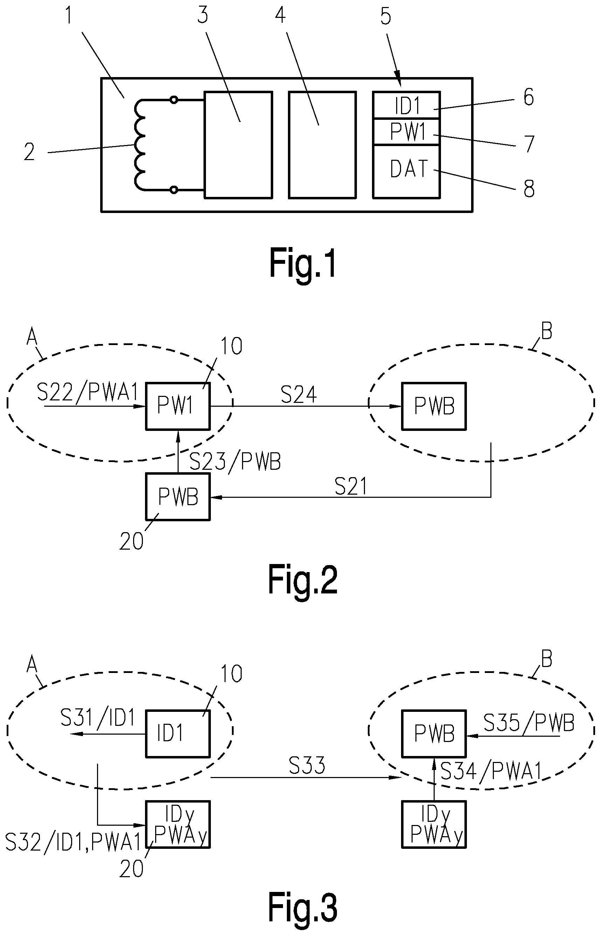

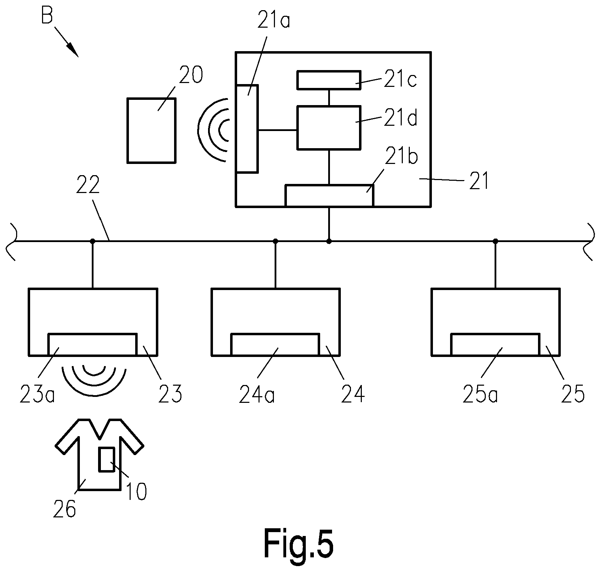

Fig. 1 schematically shows a first data carrier 1 in the form of an RFID tag. The first data carrier 1 is designed for wireless communication with a write/read device (not shown in Fig. 1), wherein the first data carrier 1 is combined with a product (likewise not shown). The first data carrier 1 contains data DAT relating to the product to be associated threrewith, for example a selling price, date and country of manufacture, recommended use-by date and similar product-specific features which are relevant both for different stages of manufacture of the product, transport or storage of the product and also, following the sale of a product, for example for guarantee or maintenance operations and also possibly for disposal of the product. Moreover, the first data carrier 1 may contain data DAT in particular for use by a purchaser of a product provided with the first data carrier 1, as discussed in detail in particular with reference to Fig. 5.

The first data carrier 1 contains an antenna 2, an analog interface 3 and corresponding logic 4. In the chip 5, which is likewise contained on the first data carrier 1, there is in particular an area 6 for storing an identification ID1 specific to the first data carrier 1, an area 7 for storing a password PW1 and also an additional memory 8 for the abovementioned data DAT. The fact that a variable password PW can be stored in the area 7 is essential for the first data carrier 1 shown in Fig. 1. Optionally, means for deactivating a password protection may also be integrated (not shown). By way of example, a flag is provided for this purpose, by means of which flag the password protection can be switched on and off.

Fig. 2 shows the transfer of a first data carrier 10 from a first system A to a second system B at the boundary of the first system A, wherein a password PWB valid in the second system B is stored on a second data carrier 20. In a first step S21, the password PWB valid in the second system B is transported from the second system B to the first system A by means of the second data carrier 20. One example of such a procedure would be the visit of a point of sale (first system A) by a customer carrying a customer loyalty card (second data carrier 20). When a product is purchased, the first data carrier 10 associated with the product is transferred from the first system A to the second system B. Of course, the procedure can be carried out for any number of purchased products, but for the sake of simplicity this example is restricted to the purchase of one product.

At the sales terminal (boundary of the first system A), a password PWA1 valid in the first system A is then transmitted to the first data carrier 10 in a second step S22, and said password PWA1 is then compared with a password PW1 stored on the first data carrier 10. In the event of a positive outcome of the comparison, in a third step S23 the password PWB valid in the second system B is then read from the second data carrier 20, transmitted to the first data carrier 10 and stored there instead of the originally stored password PW1. In a fourth step S24, the product comprising the first data carrier 10 is then transported to the second system B (for example a residence of the consumer).

In the present example, it is assumed that in the second system B use is made of a single password PWB valid therein, so that - when the product is an item of laundry for example - the first data carrier 10 can be read by a washing machine (not shown in Fig. 2) which is equipped with an appropriate read device. In this way, for example, the washing temperature intended for the item of laundry can be set automatically. At the same time, however, the privacy of the purchaser is protected by the password PWB valid in the second system B. Although the password PWB valid in the second system B could be stored by the seller during the changeover operation, this is useless if the password PWB is continuously changed, so that the seller - even with the intention of criminal use - in all probability has only an old version of the password PWB valid in the second system B.

In Fig. 2, the topological relationship of the systems A and B, which are usually spatially separate from one another, are indicated by dashed lines. In the present case, the second system B nevertheless directly adjoins the first system A in terms of logic. At the system boundary, as already mentioned, the password PW1 present on the first data carrier 10 is overwritten with the password PWB valid in the second system B. That is to say that the first data carrier 10 thus immediately belongs to the second system B. In topological terms, this means that the second system B dynamically expands up to the first system A.

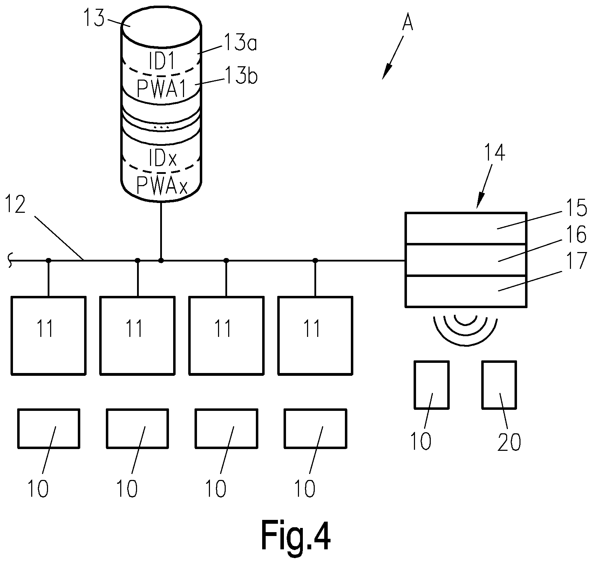

A further variation of the method shown in Fig. 2 will be explained in the text which follows. Usually, in the system of a seller (that is to say in the first system A), particularly if this is relatively large, use is not made of a password which is valid in a general manner in the first system A, but rather each first data carrier 10 or even groups of first data carriers 10 have different passwords PWAx. The allocations of identification numbers IDx and passwords PWAx are therefore usually stored in a database (cf. Fig. 4, 13). Before the second step S22 in the present case, therefore, the identification ID1 stored on the first data carrier 10 is read and transmitted to the aforementioned database 13, the password PWA1 assigned to the identification ID1 is determined in said database, and said password is then transmitted to the first data carrier 10 in step S22. The rest of the method is the same as the method already described. It should be mentioned at this point that the database 13 need not necessarily be a central database but rather this information may also exist in a decentralized manner in the first system A, in particular in a sales terminal 14.

Fig. 3 shows the transfer of a first data carrier 10 from a first system A to a second system B at the boundary of the second system B. Once again it is assumed that the system A is a system of a seller and the system B is a system of a customer. The second data carrier 20 is once again formed by a customer loyalty card in the form of a smart card. However, use may also be made of a mobile device, for example a mobile telephone with an interface according to the Near Field Communication, or NFC, standard and a corresponding storage possibility. Once again, for the sake of simplicity, only the transfer of a single first data carrier 10 is shown, whereas usually probably a number of first data carriers 10 would be transferred to the second system B during each purchase operation, for example in a supermarket.

In a first step S31, the identification ID1 stored on the first data carrier 10 is read and, as described with reference to Fig. 2, the associated password PWA1 in the first system A is determined by means of a database 13. This pair is then stored on the second data carrier 20 in a second step S32. If a number of products with associated first data carriers 10 are purchased, a number of pairs have to be stored. This is shown by the identifications IDy and passwords PWAy indexed with y. In a third step S33, the first data carrier 10 and the second data carrier 20 are transported into the second system B. There, the identification ID1 of the first data carrier 10 is read, the matching password PWA1 on the second data carrier 20 is determined and said matching password is transmitted to the first data carrier 10 in a fourth step S34. There, a check is then made to ascertain whether the determined password PWA1 corresponds to the password PW1 stored on the first data carrier 10. In the event of a positive outcome of the comparison, in a fifth step S35, the password PW1 stored on the first data carrier 10 is overwritten with the password PWB valid in the second system B. This procedure may be repeated in an analogous manner for a number of first data carriers 10. It should also be noted that it is of course also possible for a number of passwords PWB which differ from one another to be used in the second system B, even though mention has thus far been made of just one password PWB in the examples.

In this case, too, topological and logical boundaries of the systems A and B do not coincide. Since the password PW1 stored on the first data carrier 10 is overwritten only at the boundary of the second system B, the first system A extends in logic terms up to the second system B. On the way home from a supermarket, therefore, it would be possible for the first data carrier 10 to be read by a seller, and therefore in this variant the password PWB valid in the second system B must not be divulged. Storage of the same by the seller is therefore impossible.

It is also conceivable that a customer loyalty card (that is to say the second data carrier 20) is not present because it has been forgotten or use of a password-protected second system B is not desired by a customer. In this case, the password protection for the first data carrier 10 can be removed at the boundary of the first system A (that is to say at the checkout for example), either by setting a corresponding flag or by deleting the password PW1 stored on the first data carrier 10. The latter can then be integrated in the second system B at a later point in time. In this case, it is advantageous if, in the second system B, a check is made to ascertain whether a first data carrier 10 is password-protected. In the event of a negative outcome of the check, said first data carrier is written with the password PWB valid in the second system B and the password protection is activated. In this case, topological and logical boundaries of the systems A and B coincide. In the region between the systems A and B the first data carrier 10 is completely unprotected.

In Fig. 4, a first system A is shown in detail. The first system A may comprise manufacture, distribution and transport, and storage and sale. Hereinbelow, the first system A is assumed to be a place of sale. Here, use is made of a plurality of first data carriers 10, similar to the data carrier 1 shown in Fig. 1. Also provided is a plurality of write/read devices 11. The read and write devices 11 are coupled to a network which is schematically shown at 12, wherein the network 12 is in turn coupled to a database 13 in which there is stored, inter alia, a combination of an identification ID1 characteristic of a respective first data carrier 10, as stored for example in the area 13a, and also the password PWA1 valid for the respective first data carrier 10, which is stored in the area 13b. Usually, the database 13 will contain a number of such allocations, as shown by the pair IDx and PWAx bearing the index x.

Fig. 4 also shows a sales terminal 14 which comprises as essential elements a central control unit 15, means for communicating 16 with the network 12 and a write/read device 17 similar to the read/write device 11. In the range of a sales terminal 14, when a product provided with a first data carrier 10 is sold, the steps mentioned in Fig. 2 or 3 are carried out. Moreover, it is of course also possible for other steps to be carried out, such as for example the calculation of an overall cost for the purchased products, which is obligatory in respect of a sales terminal 14, and also for example an authentication of the purchaser, which may be effected for example likewise via the second data carrier 20 (customer loyalty card) or a mobile device.

Fig. 5 schematically shows a second system B for securing at least one first data carrier 10 in the range of a customer, wherein the second system B in the present example is designed as a closed application in a home environment. Here, a personal computer (PC) 21 is provided which is connected to a network 22 via an interface 21b. Also connected to the network 22 are a washing machine 23, a microwave oven 24 and a refrigerator 25. Also located in the second system B are a plurality of first data carriers 10 (only one thereof is shown in Fig. 5) and a second data carrier 20. The PC 21, the washing machine 23, the microwave oven 24 and the refrigerator 25 are each equipped with write/read devices 21a, 23a, 24a and 25a which allow wireless communication with the first data carriers 10 and the second data carrier 20.

The mode of operation of the arrangement shown in Fig. 5 is as follows: In the second system B there are a large number of objects which are equipped with first data carriers 10 and which have been purchased at a sales terminal 14 for example as shown in Figs. 2 and 3. By way of example, a shirt 26 comprising a first data carrier 10 is shown. As soon as the shirt 26 is located close to a write/read device 21a, 23a, 24a and 25a, access to the first data carrier 10 is possible. Only then the first data carrier 10 is actively integrated in the second system B. Since the write/read devices 21a, 23a, 24a and 25a usually have only a limited range, usually only some of the first data carriers 10 present in the second system B will actively be integrated in the second system, and the rest of the first data carriers 10 are "resting". The same applies in respect of the second data carrier 20. The integration of new first data carriers 10 takes place, as already mentioned, by means of the method shown in Figs. 2 or 3.

Particularly when the integration takes place according to the method shown in Fig. 2, that is to say when the password PWB valid in the second system B is in principle made known to the first system A, usually the password PWB valid in the second system B should be changed. For this purpose, in the PC 21 there are means 21c for generating a password, for example a random number generator. At periodic intervals, a new password PWB will then be generated and distributed via the network 22 to all the units of the second system B, in this case to the washing machine 23, the microwave oven 24 and the refrigerator 25. In addition, all the first data carriers 10 and the second data carrier 20 are addressed and the stored password is in each case overwritten with the new password PWB. All the components present in the second system B are thus synchronized.

As already mentioned, since probably not all the first data carriers 10 and the second data carrier 20 will be in the range of the write/read device 21a, 23a, 24a and 25a during the synchronization operation, the synchronization operation may also take place over a relatively long period of time. The first data carriers 10 are then written with the new password PWB not at the same time but rather gradually. In this case, it is necessary that the old password is also stored, in the present example in a list 21d in the PC 21, so that first data carriers 10 on which the new password PWB has not yet been stored can likewise be accessed. Advantageously, other passwords from the past are also still stored in order to be able to access first data carriers 10 which have "missed" more than one synchronization operation.

By way of example, it is now assumed that it is not the up-to-date password PWB that is stored on the first data carrier 10 of the shirt 26. If this shirt 26 is then washed, the washing machine 23 tries to read relevant data from the first data carrier 10 via the write/read device 23a, namely using the up-to-date password PWB, so that damage to the shirt 26 during washing can be prevented. In this case, the password PWB may be stored locally, that is to say directly in the washing machine 23, or, as in the present case, centrally in the PC 21. If the first data carrier 10 cannot be accessed, a search is made for the passwords PWB from the past. These may once again be stored locally or, as in the present case, centrally in the list 21d. As soon as the correct password PWB has been found, not only are the relevant data for the washing operation read, but rather the password PW1 stored on the first data carrier 10 is also updated. It may also be the case that the password protection on the first data carrier 10 is deactivated. In this case, the first data carrier 10 is written with the up-to-date password PWB and the password protection is activated.

Besides washing machine 23, microwave oven 24 and refrigerator 25, other devices can also be integrated in the second system B, for example audio/video devices, such as a DVD player for example, or intelligent storage devices, so-called "smart shelves", to name but a few. It should also be noted at this point that not necessarily all the devices need have a write device. Rather, it is also conceivable that some devices are provided only for reading first data carriers 10.

Also coupled to the network 22 is the second data carrier 20 which may be formed for example by a smart card or customer loyalty card. A mobile device having a suitable storage possibility may also be used, for example a mobile telephone, a PDA or the like. The synchronization operation also detects, in the manner mentioned above, the second data carrier 20 or the mobile device. If it is a mobile device which is designed for an alternative communication mode, this alternative mode can also be used to transmit the password PWB. By way of example, the latter may be transmitted via SMS in the case of a mobile telephone, so that the password PWB stored on the second data carrier 20 is always up-to-date, even if said second data carrier is not located in the vicinity of a write/read device 21a, 23a, 24a and 25a. In this case, it is advantageous if the PC 21 comprises means for connecting to the Internet (not shown).

It should be mentioned that, unlike the embodiment of the invention described in detail above in connection with the purchase of at least one product provided with a first data carrier 10, the present invention may also be used in a large number of other use possibilities in which the right to use a product provided with a first data carrier 10 changes.

By way of example, for servicing or maintenance purposes, it may be provided that a customer or proprietor of a product provided with a first data carrier 10 returns the product to a service point or to the seller, wherein once again, using an apparatus similar to the sales terminal 14, the password PW1 of the first data carrier 10 is changed from the password of the customer or present proprietor to the password of the service point, in order to carry out servicing or maintenance work on the product provided with the first data carrier 10. In this way, the data DAT stored on the first data carrier 10 are once again accessible to the manufacturer or service point so that the abovementioned advantages of storing relevant data DAT on a first data carrier 10 can once again be utilized by the manufacturer or service point even after an intermediate change in the right of use on account of being purchased by the customer. Once the maintenance work is complete, the product provided with the first data carrier 10 is handed back to the customer once again at a sales terminal 14, so that, by changing the password in a manner similar to the purchase procedure described in Fig. 2 or 3, the customer is once again given the sole right of use of the data contained on the first data carrier 10.

## Claims

1. A method of transferring a first electronic data carrier (1, 10) from a first system (A) to a second system (B), wherein the first electronic data carrier (1, 10) is a radio frequency identification tag in which an identification (ID1) and a password (PW1) are stored, by means of which password (PW1) access to the first data carrier (1, 10) is secured, **characterized in that** the method includes overwriting the password (PW1) stored on the first data carrier (1, 10) with a password (PWB) valid in the second system (B), wherein, for transferring a password (PWA, PWB) valid in one system (A, B) between the two systems (A, B), a second electronic data carrier (20) or a mobile device is provided, on which the password (PWA, PWB) valid in the one system (A, B) is stored,
wherein the following steps are carried out at the boundary of the first system (A):
- transmission (S22) of a password (PWA1) valid in the first system (A) to the first data carrier (1, 10),
- comparison of the password (PW1) stored on the first data carrier (1, 10) with the transmitted password (PWA1), and
- in the event of a positive outcome of the comparison, overwriting (S23) of the stored password (PW1) with a password (PWB) valid in the second system (B), which password (PWB) is read from the second data carrier (20) or the mobile device.

2. A method as claimed in claim 1, wherein the following steps are carried out beforehand:
- reading of the identification (ID1) from the first data carrier (1, 10),
- transmission of the same to a database (13) in which identifications (IDx) and passwords (PWAx) of data carriers (1, 10) of the first system (A) are stored in pairs, and
- determination of the password (PWA1) which is assigned to the transmitted identification (ID1).

3. A method as claimed in claim 1, wherein the following steps are carried out at the boundary of the first system (A):
- reading (S31) of the identification (ID1) from the first data carrier (1, 10),
- transmission of the same to a database (13) in which identifications (IDx) and passwords (PWAx) of data carriers (1, 10) of the first system (A) are stored in pairs,
- determination of the password (PWA1) which is assigned to the transmitted identification (ID1), and
- storage (S32) of the password (PWA1) and of the identification (ID1) on the second data carrier (20) or the mobile device.

4. A method as claimed in any of claims 1 to 3, wherein a check is made to ascertain whether a second data carrier (20) or a mobile device is present and, in the event of a negative outcome of the check, the password protection of the first data carrier (1, 10) is deactivated.

5. A method as claimed in claim 1, wherein the following steps are carried out at the boundary of the second system (B):
- reading of the identification (ID1) of the first data carrier (1, 10),
- reading of the identifications (IDy) and passwords (PWAy) from the second data carrier (20) or the mobile device, on which identifications (IDy) and passwords (PWAy) of a first system (A) of data carriers (1, 10) have been stored in pairs,
- determination of that password (PWA1) which is assigned to the read identification (ID1) and transmission of the password (PWA1) to the first data carrier (1, 10),
- comparison of the password (PW1) stored on the first data carrier (1, 10) with the transmitted password (PWA1), and
- overwriting of the stored password (PW1) with a new password (PWB), which is valid in the second system (B), in the event of a positive outcome of the comparison.

6. A method as claimed in claim 5, wherein firstly a check is made to ascertain whether access to the first data carrier (1, 10) is possible and, in the event of a positive outcome of the check, the following steps are carried out:
- transmission of a password (PWB) valid in the second system (B) to the first data carrier (1, 10) and
- activation of the password protection of the first data carrier (1, 10).

7. A method as claimed in claim 1, wherein the password (PWB) valid in the second system (B) for all the first data carriers (10) assigned to the second system (B), for the second data carrier (20), for the mobile device and for the write/read devices (21a, 23a, 24a, 25a) for the aforementioned data carriers (10, 20) is continuously changed.

8. A first data carrier (1,10) adapted to be transferred from a first system (A) to a second system (B), the first data carrier (1, 10) being a radio frequency identification tag in which an identification (ID1) and a password (PW1) are stored, by means of which password (PW1) access to the first data carrier (1, 10) is secured, comprising:
- means for receiving a password (PWA1) valid in the first system (A)
- means for assessing a comparison of the password (PW1) stored on the first data carrier (1, 10) with the transmitted password (PWA1),
**characterized in that** it further comprises:
- means for overwriting the password (PW1) of the first data carrier (1, 10) with a password (PWB) valid in the second system (B) in the event of a positive outcome of the comparison, and
- means for reading the password (PWB) valid in the second system (B) from a second data carrier (20) or a mobile device.

## Patentansprüche

1. Ein Verfahren zum Übertragen eines ersten elektronischen Datenträgers (1, 10) von einem ersten System (A) zu einem zweiten System (B), wobei der erste elektronische Datenträger (1, 10) ein Radiofrequenz Identifikationstag ist, in welchem eine Identifikation (ID1) und ein Passwort (PW1) gespeichert sind, mittels welchem Passwort (PW1) ein Zugriff auf den ersten Datenträger (1,10) geschützt ist,
**dadurch gekennzeichnet, dass** das Verfahren enthält
Überschreiben des Passworts (PW1), welches auf dem ersten Datenträger (1, 10) gespeichert ist, mit einem Passwort (PWB), welches in dem zweiten System (B) gültig ist, wobei zum Übertragen eines Passworts (PWA, PWB), welches in einem System (A, B) gültig ist, zwischen den zwei Systemen (A, B), ein zweiter elektronischer Datenträger (20) oder eine mobile Vorrichtung bereitgestellt ist, auf welcher das Passwort (PWA, PWB), welches in dem einen System (A, B) gültig ist, gespeichert ist,
wobei die folgenden Schritte an einer Grenze des ersten Systems (A) ausgeführt werden:
- Übertragen (S22) eines Passworts (PWA1), welches in dem ersten System (A) gültig ist, zu dem ersten Datenträger (1, 10),
- Vergleichen des Passworts (PW1), welches auf dem ersten Datenträger (1, 10) gespeichert ist, mit dem übertragenen Passwort (PWA1), und
- in dem Fall eines positiven Ergebnisses des Vergleichs, Überschreiben (S23) des gespeicherten Passworts (PW1) mit einem Passwort (PWB), welches in dem zweiten System (B) gültig ist, welches Passwort (PWB) aus dem zweiten Datenträger (20) oder der mobilen Vorrichtung gelesen wird.

2. Ein Verfahren gemäß Anspruch 1, wobei vorher die folgenden Schritte ausgeführt werden:
- Lesen der Identifikation (ID1) aus dem ersten Datenträger (1, 10),
- Übertragen derselben zu einer Datenbank (13), in welcher Identifikationen (IDx) und Passwörter (PWAx) von Datenträgern (1, 10) des ersten Systems (A) paarweise gespeichert sind, und
- Bestimmen des Passworts (PWA1), welches der übertragenen Identifikation (ID1) zugeordnet ist.

3. Ein Verfahren gemäß Anspruch 1, wobei an der Grenze des ersten Systems (A) die folgenden Schritte ausgeführt werden:
- Lesen (S31) der Identifikation (ID1) aus dem ersten Datenträger (1, 10),
- Übertragen derselben zu einer Datenbank (13), in welcher Identifikationen (IDx) und Passwörter (PWAx) von Datenträgern (1, 10) des ersten Systems (A) paarweise gespeichert sind,
- Bestimmen des Passworts (PWA1), welches der übertragenen Identifikation (ID1) zugeordnet ist, und
- Speichern (S32) des Passworts (PWA1) und der Identifikation (ID1) auf dem zweiten Datenträger (20) oder der mobilen Vorrichtung.

4. Ein Verfahren gemäß irgendeinem der Ansprüche 1 bis 3, wobei eine Prüfung durchgeführt wird, um festzustellen, ob ein zweiter Datenträger (20) oder eine mobile Vorrichtung vorhanden ist, und in dem Fall eines negativen Ergebnisses der Prüfung der Passwortschutz des ersten Datenträgers (1, 10) deaktiviert wird.

5. Ein Verfahren gemäß Anspruch 1, wobei die folgenden Schritte an einer Grenze des zweiten Systems (B) durchgeführt werden:
- Lesen der Identifikation (ID1) des ersten Datenträgers (1, 10),
- Lesen der Identifikationen (IDy) und der Passwörter (PWAy) aus dem zweiten Datenträger (20) oder der mobilen Vorrichtung, auf welcher die Identifikationen (IDy) und die Passwörter (PWAy) eines ersten Systems (A) von Datenträgern (1, 10) paarweise gespeichert wurden,
- Bestimmen des Passworts (PWA1), welches der gelesenen Identifikation (ID1) zugeordnet ist und Übertragen des Passworts (PWA1) zu dem ersten Datenträger (1, 10),
- Vergleichen des Passworts (PW1), welches auf dem ersten Datenträger (1, 10) gespeichert ist, mit dem übertragenen Passwort (PWA1), und
- Überschreiben des gespeicherten Passworts (PW1) mit einem neuen Passwort (PWB), welches in dem zweiten System (B) gültig ist, in dem Fall eines positiven Ergebnisses des Vergleichs.

6. Ein Verfahren gemäß Anspruch 5, wobei zuerst eine Prüfung durchgeführt wird, um festzustellen, ob ein Zugriff auf den ersten Datenträger (1, 10) möglich ist, und in dem Fall eines positiven Ergebnisses der Prüfung die folgenden Schritte ausgeführt werden:
- Übertragen eines Passworts (PWB), welches in dem zweiten System (B) gültig ist, zu dem ersten Datenträger (1, 10), und
- Aktivieren des Passwortschutzes des ersten Datenträgers (1, 10).

7. Ein Verfahren gemäß Anspruch 1, wobei das Passwort (PWB), welches in dem zweiten System (B) für alle die ersten Datenträger (10), welche dem zweiten System (B) zugeordnet sind, für den zweiten Datenträger (20), für die mobile Vorrichtung und für die Schreib/Lesevorrichtungen (21a, 23a, 24a, 25a) gültig ist, für die genannten Datenträger (10, 20) kontinuierlich geändert wird.

8. Ein erster Datenträger (1, 10), welcher eingerichtet ist, von einem ersten System (A) zu einem zweiten System (B) übertragen zu werden, wobei der erste Datenträger (1, 10) ein Radiofrequenz Identifikationstag ist, in welchem eine Identifikation (ID1) und ein Passwort (PW1) gespeichert sind, mittels welchem Passwort (PW1) ein Zugriff auf den ersten Datenträger (1, 10) geschützt ist, aufweisend:
- Mittel zum Empfangen eines Passworts (PWA1), welches in dem ersten System (A) gültig ist,
- Mittel zum Bewerten eines Vergleichs des Passworts (PW1), welches auf dem ersten Datenträger (1, 10) gespeichert ist, mit dem übertragenen Passwort (PWA1),
**dadurch gekennzeichnet, dass** er ferner aufweist:
- Mittel zum Überschreiben des Passworts (PW1) des ersten Datenträgers (1, 10) mit einem Passwort (PWB), welches in dem zweiten System (B) gültig ist, in dem Fall eines positiven Ergebnisses des Vergleichs, und
- Mittel zum Lesen des Passworts (PWB), welches in dem zweiten System (B) gültig ist, aus einem zweiten Datenträger (20) oder einer mobilen Vorrichtung.

## Revendications

1. Procédé de transfert d'un premier support de données électronique (1, 10) d'un premier système (A) à un second système (B), où le premier support de données électronique (1, 10) est une étiquette d'identification par radiofréquence dans laquelle une identification (ID1) et un mot de passe (PW1) sont stockés, mot de passe (PW1) au moyen duquel l'accès au premier support de données (1, 10) est sécurisé, **caractérisé en ce que** le procédé comprend d'écraser en écriture le mot de passe (PW1) stocké sur le premier support de données (1, 10) par un mot de passe (PWB) valable dans le second système (B), où, pour transférer un mot de passe (PWA, PWB) valable dans un système (A, B) entre les deux systèmes (A, B), un second support de données électronique (20) ou un dispositif mobile est pourvu, sur lequel le mot de passe (PWA, PWB) valable dans ledit système (A, B) est stocké,
où les étapes suivantes sont exécutées à la frontière du premier système (A) :
- la transmission (S22) d'un mot de passe (PWA1) valable dans le premier système (A) au premier support de données (1, 10),
- la comparaison du mot de passe (PW1) stocké sur le premier support de données (1, 10) au mot de passe transmis (PWA1), et
- en cas de résultat positif de la comparaison, l'écrasement en écriture (S23) du mot de passe stocké (PW1) par un mot de passe (PWB) valable dans le second système (B), lequel mot de passe (PWB) est lu par le second support de données (20) ou le dispositif mobile.

2. Procédé tel que revendiqué dans la revendication 1, dans lequel les étapes suivantes sont exécutées à l'avance :
- la lecture de l'identification (ID1) depuis le premier support de données (1, 10),
- la transmission de celui-ci à une base de données (13) dans laquelle les identifications (IDx) et les mots de passe (PWAx) des supports de données (1, 10) du premier système (A) sont stockés par paires, et
- la détermination du mot de passe (PWA1) qui est affecté à l'identification transmise (ID1).

3. Procédé tel que revendiqué dans la revendication 1, dans lequel les étapes suivantes sont exécutées à la frontière du premier système (A) :
- la lecture (S31) de l'identification (ID1) depuis le premier support de données (1, 10),
- la transmission de celui-ci à une base de données (13) dans laquelle les identifications (IDx) et les mots de passe (PWAx) des supports de données (1, 10) du premier système (A) sont stockés par paires,
- la détermination du mot de passe (PWA1) qui est affecté à l'identification transmise (ID1), et
- le stockage (S32) du mot de passe (PWA1) et de l'identification (ID1) sur le second support de données (20) ou sur le dispositif mobile.

4. Procédé tel que revendiqué dans l'une quelconque des revendications 1 à 3, dans lequel une vérification est effectuée pour vérifier si un second support de données (20) ou un dispositif mobile est présent et, en cas de résultat négatif de la vérification, la protection par mot de passe du premier support de données (1, 10) est désactivée.

5. Procédé tel que revendiqué dans la revendication 1, dans lequel les étapes suivantes sont exécutées à la frontière du second système (B) :
- la lecture de l'identification (ID1) du premier support de données (1, 10),
- la lecture des identifications (IDy) et des mots de passe (PWAy) depuis le second support de données (20) ou le dispositif mobile, sur lequel les identifications (IDy) et les mots de passe (PWAy) d'un premier système (A) de supports de données (1, 10) ont été stockés par paires,
- la détermination du mot de passe (PWA1) qui est affecté à l'identification lue (ID1) et la transmission du mot de passe (PWA1) au premier support de données (1, 10),
- la comparaison du mot de passe (PW1) stocké sur le premier support de données (1, 10) avec le mot de passe transmis (PWA1), et
- l'écrasement en écriture du mot de passe stocké (PW1) par un nouveau mot de passe (PWB), lequel est valable dans le second système (B), en cas de résultat positif de la comparaison.

6. Procédé tel que revendiqué dans la revendication 5, dans lequel il est tout d'abord vérifié si l'accès au premier support de données (1, 10) est possible et, en cas de résultat positif à la vérification, les étapes suivantes sont exécutées :
- la transmission d'un mot de passe (PWB) valable dans le second système (B) au premier support de données (1, 10), et
- l'activation de la protection par mot de passe du premier support de données (1, 10).

7. Procédé tel que revendiqué dans la revendication 1, dans lequel le mot de passe (PWB) valable dans le second système (B) pour tous les premiers supports de données (10) affectés au second système (B), pour le second support de données (20), pour le dispositif mobile et pour les dispositifs d'écriture/de lecture (21a, 23a, 24a, 25a) pour les supports de données précités (10,20) est continuellement modifié.

8. Premier support de données (1, 10) adapté pour être transféré d'un premier système (A) à un second système (B), le premier support de données (1, 10) étant une étiquette d'identification par radiofréquence dans laquelle une identification (ID1) et un mot de passe (PW1) sont stockés, mot de passe (PW1) au moyen duquel l'accès au premier support de données (1, 10) est sécurisé, le support comprenant :
- des moyens pour recevoir un mot de passe (PWA1) valable dans le premier système (A),
- des moyens permettant d'évaluer une comparaison entre le mot de passe (PW1) stocké sur le premier support de données (1, 10) et le mot de passe transmis (PWA1), **caractérisé en ce qu'**il comprend en outre :
- des moyens pour écraser en écriture le mot de passe (PW1) du premier support de données (1, 10) par un mot de passe (PWB) valable dans le second système (B) en cas de résultat positif de la comparaison, et
- des moyens pour lire le mot de passe (PWB) valable dans le second système (B) depuis un second support de données (20) ou un dispositif mobile.
